# DEMANDE DE BREVET EUROPEEN

(11) **EP 3 993 313 A1**
(43) Date de publication de la demande: **04.05.2022**
(21) Numéro de dépôt: 21204458.0
(22) Date de dépôt: 25.10.2021
(51) Int. Cl.: H04L 9/08, H04B 10/70

(54) **PROCEDE D'ECHANGE SECURISE DE DONNEES VIA UN SYSTEME DE MESSAGERIE PAR SATELLITE**

(30) Priorité: 29.10.2020 FR 2011074
(71) Demandeur: THALES, 92400 Courbevoie (FR)
(72) Inventeur: GAYRARD, Jean-Didier, 31100 TOULOUSE (FR)
(74) Mandataire: Marks & Clerk France

(57) **Abrégé**

L'invention porte sur un procédé d'échange sécurisé de fichiers de clés secrètes via un système de messagerie par satellite comprenant :
- une première phase où :
• un satellite (SAT) et une première station terrestre (SA) échangent une première clé secrète (CQAᵢ) par une liaison quantique (201),
• la première station terrestre chiffre un fichier de clés secrètes avec la première clé secrète et le transmet au satellite (202),
• le satellite le stocke en mémoire (203),

- une deuxième phase où :
• le satellite et une deuxième station terrestre (SB) échangent une deuxième clé secrète (CQBⱼ) par une liaison quantique (211),
• le satellite chiffre le fichier de clés secrètes stocké en mémoire avec la deuxième clé secrète, et le transmet à la deuxième station terrestre (212),
• la deuxième station terrestre le déchiffre avec la deuxième clé secrète (213).

L'invention porte également sur un satellite, une station terrestre et un système de transmission implémentant le procédé.

## Description

### Domaine technique :

Le domaine technique de l'invention est celui des systèmes de messagerie (en anglais *store* & *forward messaging*) par satellite. L'invention concerne plus particulièrement la sécurisation des liaisons de données entre un utilisateur et le satellite dans un tel système. Le système de messagerie implémentant des aspects de l'invention permet assurer la confidentialité et l'intégrité des données échangées entre deux utilisateurs. Un sous-domaine de l'invention est celui des systèmes de distribution de clés.

### Technique antérieure :

Les systèmes de messagerie par satellite à haut débit permettent d'échanger des gros fichiers de données entre deux stations terrestres de messagerie distantes réparties sur la terre. L'échange d'un fichier se fait en deux phases : une première phase de stockage (en anglaise *store*), au cours de laquelle un fichier est transmis d'une première station terrestre de messagerie vers un satellite du système de messagerie qui le stocke dans sa mémoire, et une deuxième phase de retransmission ou acheminement (en anglais *forward*) au cours de laquelle le fichier est extrait de la mémoire du satellite et transmit à une deuxième station terrestre de messagerie. Ce mécanisme de transferts de fichiers n'est pas en temps réel : un certain temps peut séparer la première et la deuxième phase selon la distance entre les stations terrestres, le déplacement du satellite et/ou les conditions météorologiques.

Dans le cas de satellite en orbite basse ou en orbite moyenne (satellite défilant), la première phase de stockage correspond au passage du satellite au-dessus de la première station, la deuxième phase d'acheminement correspond au passage du satellite au-dessus de la deuxième station. Dans le cas d'un satellite géostationnaire ayant en visibilité les deux stations, le déclenchement des phases de stockage et d'acheminement est lié aux conditions météorologiques au-dessus des stations. En effet, la présence d'une couverture nuageuse au-dessus d'une station peut bloquer les liaisons optiques en espace libre et empêcher alors la transmission de données. Les deux phases se succèdent donc dans le temps en fonction de l'évolution des conditions météorologiques.

Par la suite, selon les conventions classiques dans le domaine de la cryptologie, la première station terrestre, qui envoie les données dans le système de messagerie, sera nommée station d'Alice, tandis que la deuxième station terrestre, qui reçoit les données du système de messagerie, sera nommée station de Bob. Eve représente un tiers susceptible d'écouter les échanges entre la station Alice, la station de Bob et le satellite.

Les systèmes de messagerie par satellite selon l'état de l'art présentent une faille de sécurité ; il existe en effet des techniques d'interception (écoute) des transmissions de satellite à l'aide de simples matériels disponibles dans le commerce. Ainsi, Eve peut écouter la liaison entre le satellite et la station de Bob, et connaitre le contenu des fichiers transmis. De même, un satellite espion au voisinage du satellite du système de messagerie peut aisément écouter la liaison entre la station d'Alice et le satellite, et transmettre le contenu des fichiers à Eve. Pour pallier à cette faille de sécurité, il est connu de mettre en place un protocole de sécurisation des données transmises.

Un premier protocole de sécurisation des liaisons de messagerie par satellite consiste à procéder au chiffrement bout en bout de la liaison. Ainsi la station d'Alice chiffre, préférablement avec un algorithme de chiffrement à clés symétriques ou clés secrètes, les fichiers de données destinés à la station de Bob avec une ou plusieurs clés secrètes Cᵢ. Pendant la période de visibilité du satellite, la station d'Alice transmet au satellite les fichiers de données chiffrées. Le satellite stocke dans sa mémoire ces fichiers chiffrés. Pendant la période de visibilité de la station de Bob, le satellite transmet les données chiffrées à la station de Bob. Par un moyen sécurisé quelconque autre que la liaison satellite, la station d'Alice transmet à la station de Bob la ou les clés Cᵢ utilisée(s) pour chiffrer les fichiers. Muni de cette (ces) clé(s), Bob déchiffre les fichiers et récupère les données en clair. La sécurité des liaisons de messagerie est assurée puisque Eve ne peut écouter que les fichiers chiffrés. Toutefois ce système a un inconvénient majeur : la station d'Alice doit transmettre de façon sécurisée la ou les clés secrètes Cᵢ à la station de Bob. Cet inconvénient peut être rédhibitoire car la majorité des utilisateurs de systèmes de messagerie par satellite n'ont pas de moyen de communication annexes fiables et sécurisés pour échanger des clés secrètes.

Un autre protocole de sécurisation des liaisons de messagerie par satellite consiste à procéder au chiffrement avec un algorithme de chiffrement à clés symétriques sur les deux liaisons : la liaison reliant la station d'Alice au satellite et la liaison reliant le satellite à la station de Bob. Au début du passage du satellite au-dessus de la station d'Alice, la station d'Alice et le satellite établissent une ou plusieurs clé(s) secrète(s) CAᵢ. Comme la liaison n'est pas encore sécurisée, cet établissement de clés utilisera un algorithme de chiffrement à clés asymétriques ou clés publiques/privées. Une fois la ou les clé(s) secréte(s) CAᵢ établie(s), la station d'Alice la ou les utilise pour chiffrer les fichiers de données transmis au satellite avec un algorithme de chiffrement à clés symétriques. La station d'Alice transmet ensuite les fichiers chiffrés au satellite. Le satellite déchiffre les fichiers de données à l'aide de la (ou des) clé(s) CAᵢ, et stocke ces fichiers dans sa mémoire en clair. De même, au début du passage du satellite au-dessus de la station de Bob, la station de Bob et le satellite établissent une ou plusieurs nouvelles clés secrètes CBⱼ. Comme cette liaison n'est pas encore sécurisée, cet échange utilisera un algorithme de chiffrement à clés asymétriques ou publiques/privées. Une fois la ou les clé(s) secrètes CBⱼ établie(s), le satellite utilise la ou les clé(s) secrète(s) pour chiffrer les fichiers de données transmis à la station de Bob avec un algorithme de chiffrement à clés symétriques. Le satellite transmet les fichiers de données chiffrées à la station de Bob.. La station de Bob déchiffre les fichiers avec la ou les clés secrètes CBⱼ. La sécurité des liaisons de messagerie est assurée puisque Eve ne peut écouter que les fichiers chiffrés.

Toutefois cette solution présente une potentielle faille de sécurité dans la phase d'établissement des clés secrètes CAᵢ et CBⱼ par un algorithme de chiffrement à clés asymétriques ou publiques/privées. En effet, les experts estiment que d'ici les 20 prochaines années les ordinateurs quantiques seront aptes à "casser" en un temps très court (< 1 an), les algorithmes de cryptographie asymétrique à clés publiques/privées (par exemple les algorithmes de type RSA (du nom de ses trois inventeurs : Ronald Rivest, Adi Shamir et Leonard Adleman), algorithme de Diffie Hellman ou algorithmes par Courbes Elliptiques). Ainsi, Eve munie d'un système d'écoute et d'enregistrement des liaisons satellite et d'un ordinateur quantique pourrait reconstruire la clé privée de la station de Bob utilisée pour déchiffrer les clés symétriques CBⱼ, et ainsi déchiffrer le contenu des fichiers enregistrés.

Cette faille de sécurité n'existerait pas pour les algorithmes de chiffrement à clés symétriques (par exemple AES), *a priori* inviolables à des attaques par force brute menées par des ordinateurs quantiques.

Un objet de l'invention est donc de résoudre la faille de sécurité identifiée dans les systèmes de messagerie de l'art antérieur en proposant un système de messagerie par satellite dans lequel l'ensemble des transmissions de données entre le satellite et les stations terrestres de messagerie du système sont sécurisées. Le procédé de sécurisation proposé repose d'une part sur le chiffrement des fichiers de données transmis par un algorithme de cryptographie à clés symétriques, et d'autre part sur l'échange quantique de clés secrètes par satellite.

### Résumé de l'invention :

A cet effet, l'invention porte sur un procédé d'échange sécurisé de fichiers de clés secrètes via un système de messagerie par satellite comprenant au moins un satellite, et une pluralité de stations terrestres reliées chacune à un server de clés secrètes. Le procédé selon l'invention comprend :
- une première phase, réalisée lors du passage d'un satellite parmi les au moins un satellite en visibilité d'une première station terrestre, au cours de laquelle :
   ∘ le satellite et la première station terrestre échangent au moins une première clé secrète CQAᵢ par une liaison quantique,
   ∘ le serveur de clés secrètes relié à la première station terrestre chiffre un ou plusieurs fichiers de clés secrètes en utilisant la ou les premières clés secrètes CQAᵢ, et transmet le ou les fichiers de clés secrètes chiffrés au satellite,
   ∘ le satellite reçoit le ou les fichiers de clés secrètes transmis par la première station terrestre, et le ou les stocke en mémoire, chiffrés ou en clair après avoir été déchiffré en utilisant la ou les premières clés secrètes CQAᵢ,
- une deuxième phase, réalisée lors du passage du satellite en visibilité d'une deuxième station terrestre, au cours de laquelle :
   ∘ le satellite et la deuxième station terrestre échangent au moins une deuxième clé secrète CQBⱼ par une liaison quantique,
   ∘ le satellite chiffre le ou les fichiers de clés secrètes stockées en mémoire en utilisant la ou les deuxièmes clés secrètes CQBⱼ, et le ou les transmet chiffrées par la ou les deuxièmes clés secrètes CQBⱼ à la deuxième station terrestre,
   ∘ la deuxième station terrestre reçoit le ou les fichiers de clés secrètes chiffrés transmis par le satellite, et le ou les transmet au serveur de clés secrètes qui déchiffre le ou les fichiers de clés secrètes en utilisant la ou les deuxièmes clés secrètes CQBⱼ.

Dans un mode de réalisation, les fichiers de clés secrètes reçus par le satellite lors de la première phase du procédé sont déchiffrés en utilisant la ou les premières clés secrètes CQAᵢ puis stockés en clair dans la mémoire du satellite.

Dans un autre mode de réalisation, le ou les fichiers de clés secrètes reçus par le satellite lors de la première phase du procédé sont stockés chiffrées dans la mémoire du satellite. La ou les premières clés secrètes CQAᵢ sont chiffrées par le satellite en utilisant la ou les deuxièmes clés secrètes CQBⱼ et transmises à la deuxième station terrestre lors de la deuxième phase du procédé, et le déchiffrement du ou des fichiers de clés secrètes chiffrés reçus par la deuxième station terrestre comprend en outre l'utilisation de la ou les premières clés secrètes CQAᵢ.

Selon un mode de réalisation, les étapes d'échange de clés secrètes par une liaison quantique, respectivement entre la première station terrestre et le satellite et entre la deuxième station terrestre et le satellite, sont réalisées par la mise en œuvre d'un canal quantique optique unidirectionnel pour la transmission en espace libre de photons et d'un canal de protocole bidirectionnel pour la réconciliation et la vérification des clés, et dans lequel les étapes de transmission de données, respectivement entre la première station terrestre et le satellite et entre la deuxième station terrestre et le satellite, sont réalisées par la mise en œuvre d'un canal de données.

Dans un mode de réalisation, le canal de protocole est mis en œuvre par une liaison optique en espace libre en modulant/démodulant des balises de pointage destinés à l'orientation de télescopes du satellite et des stations terrestres, et dans lequel le canal quantique et le canal de données sont mis en œuvre par une même liaison optique en espace libre.

Dans un mode de réalisation, le canal de protocole est mis en œuvre par une liaison radiofréquence en espace libre, et le canal quantique et le canal de données sont mis en œuvre par une même liaison optique en espace libre.

Dans un mode de réalisation, le canal de protocole, le canal quantique et le canal de données sont mis en œuvre par une même liaison optique en espace libre.

L'invention porte également sur un satellite comprenant :
- des moyens pour la mise en œuvre d'un canal quantique par une liaison optique en espace libre,
- des moyens pour la mise en œuvre d'un canal de protocole par une liaison en espace libre,
- des moyens pour la mise en œuvre d'un canal de données par une liaison en espace libre, le satellite étant configuré pour mettre en œuvre un procédé d'échange sécurisé de fichiers de clés secrètes via un système de messagerie par satellite selon l'invention avec deux stations terrestres.

Elle porte également sur une station terrestre comprenant :
- des moyens pour la mise en œuvre d'un canal quantique par une liaison optique en espace libre,
- des moyens pour la mise en œuvre d'un canal de protocole par une liaison en espace libre,
- des moyens pour la mise en œuvre d'un canal de données par une liaison en espace libre,
la station terrestre étant configurée pour émettre des données chiffrées vers une deuxième station terrestre par l'intermédiaire d'un satellite ou pour recevoir des fichiers de clés secrètes chiffrés d'une deuxième station terrestre par l'intermédiaire d'un satellite par un procédé d'échange sécurisé de fichiers de clés secrètes via un système de messagerie par satellite selon l'invention.

Dans un mode de réalisation du satellite et/ou de la station terrestre selon l'invention, le canal de données est mis en œuvre par une liaison optique en espace libre.

Dans un mode de réalisation de l'invention, le satellite et/ou la station terrestre comprend des moyens permettant le partage d'une liaison optique en espace libre entre le canal quantique et le canal de données.

Dans un mode de réalisation de l'invention, le satellite et/ou la station terrestre comprend des moyens de modulation/démodulation de balises de pointage destinées à l'orientation d'un télescope du satellite et de télescopes des stations terrestres permettant la mise en œuvre du canal de protocole.

Dans un mode de réalisation de l'invention, le satellite et/ou la station terrestre comprend des moyens permettant le partage d'une liaison optique en espace libre entre le canal de protocole et le canal de données.

Enfin, l'invention porte sur un système de messagerie par satellite comprenant au moins un satellite selon l'invention, et au moins deux stations terrestres l'invention. En particulier, le système selon l'invention est utilisé pour le partage de fichiers de clés secrètes.

### Brève description des figures :

L'invention sera mieux comprise et d'autres caractéristiques, détails et avantages apparaîtront mieux à la lecture de la description qui suit, donnée à titre non limitatif, et grâce aux figures annexées, données à titre d'exemple, parmi lesquelles :
- la figure 1 représente le contexte opérationnel correspondant à un premier mode de réalisation d'un procédé d'échange sécurisé de données via un système de messagerie par satellite selon l'invention ;
- la figure 2 illustre un mode de réalisation des étapes de la première phase d'un procédé d'échange sécurisé de données via un système de messagerie par satellite selon l'invention ;
- la figure 3 illustre un mode de réalisation des étapes de la deuxième phase d'un procédé d'échange sécurisé de données via un système de messagerie par satellite selon l'invention ;
- la figure 4 représente un exemple de schéma d'architecture de la charge utile d'un satellite dans un système de messagerie par satellite sécurisé selon un mode de réalisation de l'invention ;
- la figure 5 représente un exemple de schéma d'architecture d'une station terrestre dans un système de messagerie par satellite sécurisé selon un mode de réalisation de l'invention ;
- la figure 6 représente un contexte opérationnel correspondant à un autre mode de réalisation d'un procédé d'échange sécurisé de données dans un système de messagerie par satellite selon l'invention ;
- la figure 7 représente un exemple de schéma d'architecture de la charge utile d'un satellite dans un système de messagerie par satellite sécurisé selon un mode de réalisation de l'invention ;
- la figure 8 représente un exemple de schéma d'architecture d'une station terrestre dans un système de messagerie par satellite sécurisé selon un mode de réalisation de l'invention ;
- la figure 9 représente un exemple de schéma d'architecture de la charge utile d'un satellite dans un système de messagerie par satellite sécurisé selon un mode de réalisation de l'invention ;
- la figure 10 représente un exemple de schéma d'architecture d'une station terrestre dans un système de messagerie par satellite sécurisé selon un mode de réalisation de l'invention ;
- la figure 11 représente un exemple de schéma d'architecture d'un système de distribution de clés secrètes utilisant le procédé d'échange sécurisé de données par satellite selon un mode de réalisation de l'invention.

Des références identiques peuvent être utilisées dans des figures différentes lorsqu'elles désignent des éléments identiques ou comparables.

### Description détaillée :

Le procédé selon l'invention s'appuie sur l'échange quantique de clés (plus connu en anglais sous le terme de Quantum *Key Distribution, ou QKD*). Les technologies et les protocoles d'échange quantique de clés entre deux équipements sur des liaisons par fibre optique ont été mises au point ces dernières années. Plus récemment, des liaisons quantiques en espace libre entre un satellite et des stations terrestres ont été réalisées.

Les échanges quantiques de clés permettent à deux dispositifs de générer une clé partagée connue d'eux seuls. Les échanges quantiques de clés requièrent l'utilisation de deux canaux de transmission distincts : un canal de transmission dit « quantique » utilisant une liaison optique en espace libre, et un canal de transmission dit « de protocole » utilisant une liaison radiofréquence pour le contrôle du canal quantique et l'application d'un protocole spécifique. En particulier, le canal de protocole sert entre autres à l'échange de données de réconciliation et de vérification des clés (plus connu sous le terme anglais de *Information reconciliation and privacy amplification*). Deux grands types de protocoles d'échange quantique de clés sont connus : les protocoles de type "*Prepare et Mesure*" (P&M, en anglais *prepare and mesure*) et les protocoles de type "*par paire de photons intriqués*" (en anglais *Entanglement*).

Dans le cas d'un protocole de type P&M, un premier équipement (par exemple un satellite) émet sur le canal quantique une suite de photons dont l'état quantique, état ϕ0 ou état ϕ1 (donné par exemple par la polarisation des photons), est déterminé par une séquence aléatoire générée localement. Un deuxième équipement (par exemple la station d'Alice) reçoit cette suite de photons et mesure l'état quantique de chaque photon en le dirigeant soit vers un appareil mesurant un état quantique ϕ0, soit vers un appareil mesurant un état ϕ1. Le choix de l'appareil de mesure est déterminé par une séquence aléatoire générée localement (donc différente de celle du satellite). Lorsque l'appareil mesurant un état quantique ϕ1 du deuxième équipement mesure un photon en état ϕ0, il considère le photon comme perdu. Le deuxième équipement établit la liste des mesures effectuées, qui sont soit l'état ϕ0, soit l'état ϕ1, soit absence de photon. Les mesures « absence de photon » interviennent soit dans le cas où le photon s'est perdu pendant la transmission (absorption par le milieu, diffraction changeant la destination, capture par un équipement tiers,...), soit dans le cas où l'état quantique du photon ne correspond pas à l'appareil de mesure sélectionné. Les mesures état ϕ0 et état ϕ1 interviennent lorsque l'état du photon correspond à l'appareil de mesure sélectionné.

A l'issue de cette phase de transmission de photons par le canal quantique, la phase de réconciliation commence, durant laquelle le premier équipement transmet au deuxième équipement la séquence des états quantiques de la suite de photons transmis par le canal de protocole. Le deuxième équipement transmet au premier équipement, toujours par le canal de protocole, la liste des mesures effectuées. A partir des informations échangées (séquence des états et liste des mesures), les deux équipements sont capables de déterminer une séquence commune correspondant uniquement aux cas où l'état transmit et l'état mesuré sont identiques. Cette séquence commune a une nature aléatoire et sert à constituer une clé secrète symétrique connue uniquement des deux équipements, le principe de la transmission quantique garantissant que les photons reçus n'ont pas été interceptés par un tiers observateur. Un exemple de protocole de type P&M connu est le protocole BB84.

Avantageusement, les étapes de transmission de photons sur le canal quantique et le canal de protocole peuvent être mises en œuvre simultanément.

Dans le cas d'un protocole de type par paire de photons intriqués, une suite de paires de photons intriqués est générée soit par le premier équipement, soit par le deuxième équipement, ou soit par une source distincte des deux équipements. Un photon de la paire est transmis au premier équipement, l'autre photon de la paire est transmis au deuxième équipement, les acheminements de photons se faisant par le canal quantique. Les deux équipements mesurent l'état du photon reçu par un appareil de mesure piloté par une séquence aléatoire. Du fait du phénomène d'intrication quantique, les deux photons ont le même état. Une phase de réconciliation par le canal de protocole permet de définir conjointement une clé commune symétrique. Des exemples de protocole par paire de photons intriqués connus sont le protocole E91 et le protocole BBM92.

L'invention décrite ci-après s'applique quel que soit le type de protocole utilisé. Bien que la description fasse référence à un protocole P&M, l'invention s'applique de manière identique pour un protocole à paire de photons intriqués, ou pour tout autre type de protocole.

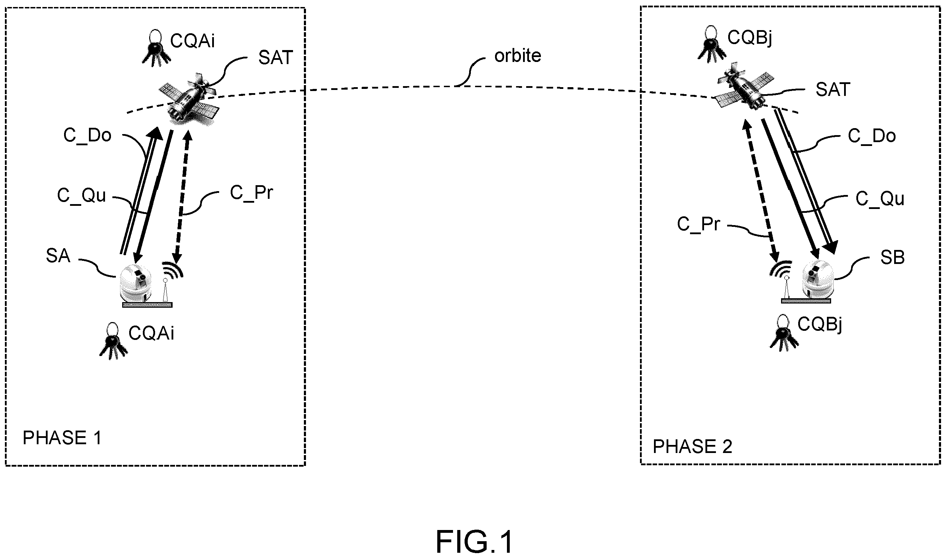

La figure 1 représente le contexte opérationnel correspondant à un premier mode de réalisation d'un procédé d'échange sécurisé de données via un système de messagerie par satellite selon l'invention. La partie gauche de la figure 1, dénommée « PHASE 1 », illustre une première phase du procédé, réalisée lors du passage du satellite (SAT) en visibilité de la station d'Alice (SA). Durant cette phase, la station d'Alice transmet au satellite des fichiers de données chiffrés par une ou plusieurs premières clés secrètes CQAᵢ. Le satellite déchiffre les fichiers de données avec la ou les premières clés CQAᵢ. Les fichiers de données sont mémorisés en clair dans la mémoire du satellite. La partie droite de la figure 1, dénommée « PHASE 2 », illustre une deuxième phase du procédé, réalisé après la phase 1, lors du passage du satellite en visibilité de la station de Bob (SB). Durant cette phase, le satellite transmet à la station de Bob les données mémorisées chiffrées par une ou plusieurs clés secrètes CQBⱼ.

Ainsi, les fichiers de données transmis sont chiffrés de proche en proche : chaque liaison est chiffrée indépendamment de l'autre et aucune clé n'est transportée entre Alice et Bob.

La phase 1 comprend plusieurs étapes :
- une étape 201 d'échange, par voie quantique, d'une ou plusieurs clés secrètes CQAᵢ entre la station d'Alice et le satellite,
- une étape 202 de chiffrement, par la station d'Alice, des fichiers de données à transmettre en utilisant la ou les premières clés secrètes CQAᵢ, et de transmission des fichiers au satellite, et
- une étape 203 de réception par le satellite des fichiers transmis par la station d'Alice, de déchiffrement des fichiers en utilisant la ou les clés secrètes CQAᵢ, et de mémorisation des fichiers de données déchiffrés.

A l'issue de la phase 1, la station d'Alice et le satellite peuvent détruire les clés CQAi pour éviter leur compromission.

Bien que l'échange d'un seule clé secrète CQAi soit suffisant pour mettre en œuvre le procédé selon l'invention, il est également possible d'utiliser plusieurs clés, par exemple en utilisant une clé différente pour chaque fichier de données transmis, ou en découpant les fichiers transmis et en utilisant une clé par morceau de fichier.

De même, la phase 2 du procédé comprend plusieurs étapes :
- une étape d'échange, par voie quantique, d'une ou plusieurs clés secrètes CQBⱼ entre la station de Bob et le satellite,
- une étape de chiffrement, par le satellite, des fichiers de données mémorisés en utilisant la ou les deuxièmes clés secrètes CQBⱼ, et de transmission des fichiers à la station de Bob, et
- une étape de réception par la station de Bob des fichiers transmis par le satellite, et de déchiffrement des fichiers en utilisant la ou les clés secrètes CQBⱼ.

A l'issue de la phase 2, la station de Bob et le satellite peuvent détruire les clés CQBⱼ pour éviter leur compromission.

Le procédé décrit impose un algorithme spécifique de chiffrement à clés symétriques pour les deux liaisons : de la station d'Alice vers le satellite et du satellite vers la station de Bob. Ainsi, le satellite dispose d'une fonction ou d'un équipement de chiffrement/déchiffrement lui permettant d'accéder au contenu des fichiers de données transmis, qu'il stocke en clair dans sa mémoire, et les stations d'Alice et de Bob sont équipées de fonctions ou d'équipements de chiffrement/déchiffrement compatibles avec ceux du satellite.

Les liaisons entre le satellite et la station d'Alice ou la station de Bob nécessitent la mise en œuvre de trois canaux de communication :
- un canal quantique (C_Qu), destiné à la transmission de photons pour l'échange quantique de clés entre le satellite et les stations terrestres,
- un canal de protocole (C_Pr), pour le contrôle physique et protocolaire du canal quantique, et pour l'échange de données de réconciliation et de vérification des clés (en anglais *Reconciliation and Privacy amplification*), et
- un canal de données (C_Do), pour la transmission sécurisée des fichiers de données de messagerie.

Un canal de transmission correspond à une liaison entre deux équipements permettant d'échanger des informations. Des canaux distincts peuvent être mis en œuvre au travers d'une même liaison de transmission, ou de liaisons de transmission distinctes.

Le canal quantique utilise une liaison optique en espace libre, unidirectionnelle de la station vers le satellite (comme sur la figure 1) ou du satellite vers la station.

Le canal de protocole utilise une liaison bidirectionnelle. Selon le mode de réalisation de l'invention, le canal de protocole peut utiliser une liaison optique en espace libre ou une liaison radiofréquence.

Le canal de données est bidirectionnel. Il permet la transmission de fichiers de données soit du sol vers le satellite dans la phase de transmission des fichiers de la station d'Alice vers le satellite, soit du satellite vers le sol dans la phase de transmission des fichiers du satellite vers la station de Bob. Selon le mode de réalisation de l'invention, le canal de données peut utiliser une liaison optique en espace libre (comme sur la figure 1) ou une liaison radiofréquence.

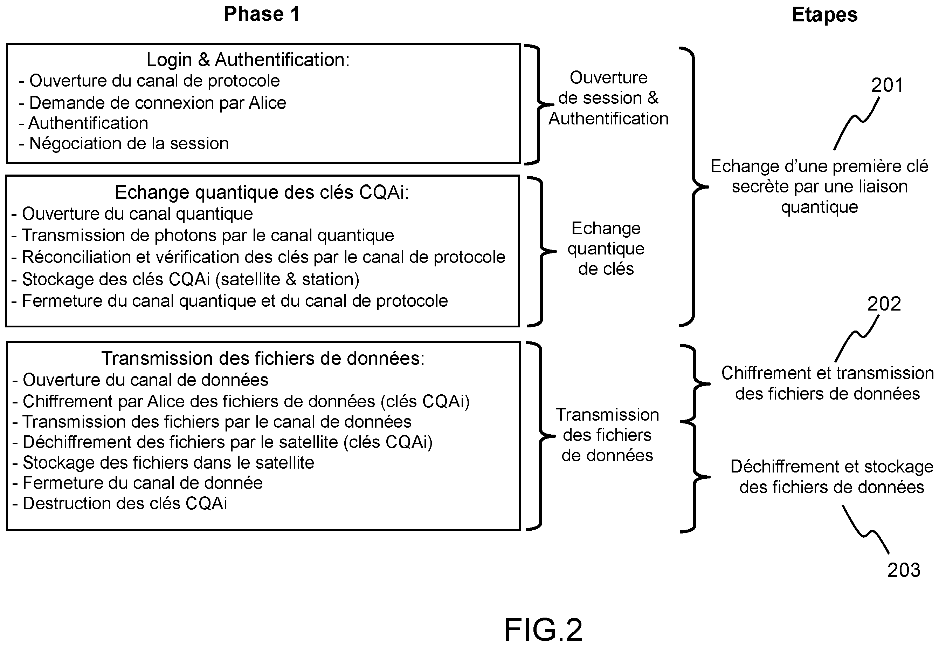

La figure 2 illustre un mode de réalisation des étapes de la première phase d'un procédé d'échange sécurisé de données via un système de messagerie par satellite selon l'invention, réalisée lorsque le satellite est en visibilité de la station d'Alice.

La première étape 201 de la première phase du procédé selon l'invention consiste à échanger une ou plusieurs première clé(s) secrète(s) CQAᵢ par une liaison quantique entre la station d'Alice (SA) et le satellite (SAT).

Cet échange peut être mis en œuvre en deux temps :
- dans un premier temps, le satellite s'assure de l'identité d'Alice et de la légitimité de la demande d'accès au service (authentification). Cela comprend l'ouverture du canal de protocole C_Pr par le satellite (établissement de la liaison radiofréquence), l'émission d'une demande de connexion au satellite par la station d'Alice sur le canal de protocole, la négociation d'une session entre les deux dispositifs, et l'établissement des paramètres de la session, par exemple le nombre de clés échangées, le nombre de fichiers échangés et la taille des fichiers ;
- dans un second temps, la station d'Alice et le satellite réalisent l'échange quantique de(s) clé(s) secrète(s) CQAᵢ. L'échange quantique de clé(s) comprend l'ouverture du canal quantique (C_Qu), par le satellite ou la station d'Alice en fonction de la direction du canal quantique unidirectionnel et la transmission de photons par ce canal. Il comprend également la réconciliation et la vérification des clés, en conformité avec le protocole QKD choisi, par des échanges entre la station d'Alice et le satellite sur le canal de protocole C_Pr, le stockage des clés CQAᵢ dans le satellite et dans la station d'Alice, et la fermeture du canal quantique C_Qu et du canal de protocole C_Pr.

La deuxième étape 202 de la première phase du procédé selon l'invention porte sur le chiffrement des fichiers de données et la transmission des fichiers chiffrés par la station d'Alice.

Elle comprend l'ouverture du canal de données C_Do, le chiffrement des fichiers de données à transmettre par la station d'Alice en utilisant la ou les clé(s) secrète(s) CQAᵢ, et l'envoi des fichiers de données chiffrés au satellite en utilisant le canal de données C_Do.

La troisième étape 203 de la première phase du procédé selon l'invention porte sur la réception et le déchiffrement par le satellite des fichiers de données chiffrés reçus sur le canal de données C_Do en utilisant la ou les clé(s) secrète(s) CQAᵢ, et la mémorisation des fichiers de données déchiffrés. Enfin, le satellite (SAT) clôt le canal de données (C_Do), et la station d'Alice et le satellite détruisent la ou les clés CQAᵢ, achevant ainsi la première phase du procédé selon l'invention.

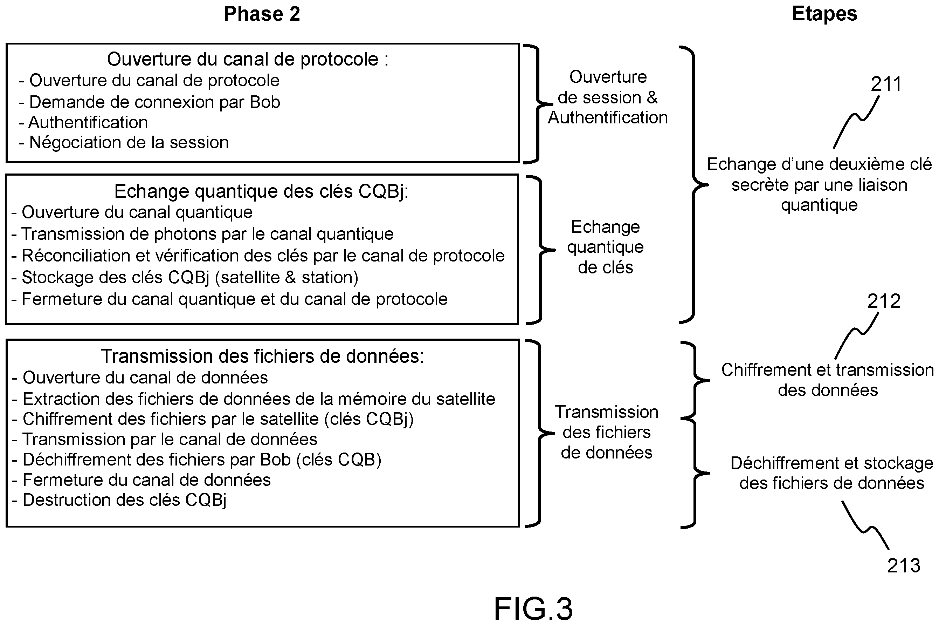

La figure 3 illustre un mode de réalisation des étapes de la deuxième phase d'un procédé d'échange sécurisé de données via un système de messagerie par satellite selon l'invention, réalisée lorsque le satellite est en visibilité de la station de Bob, après avoir mémorisé les fichiers de données transmis par la station d'Alice.

La première étape 211 de la deuxième phase du procédé selon l'invention consiste à échanger une ou plusieurs deuxième clé(s) secrète(s) CQBⱼ par une liaison quantique entre la station de Bob (SB) et le satellite (SAT).

Cet échange peut être mis en œuvre en deux temps :
- dans un premier temps, le satellite s'assure de l'identité de Bob et de la légitimité de la demande d'accès au service (authentification). Cela comprend l'ouverture du canal de protocole C_Pr par le satellite (établissement de la liaison radiofréquence), l'émission d'une demande de connexion au satellite par la station de Bob sur le canal de protocole, la négociation d'une session entre les deux dispositifs, et l'établissement des paramètres de la session ;
- dans un second temps, la station de Bob et le satellite réalisent l'échange quantique de(s) clé(s) CQBⱼ. L'échange quantique de clé(s) comprend l'ouverture du canal quantique (C_Qu), par le satellite ou la station de Bob en fonction de la direction du canal quantique unidirectionnel, et la transmission de photons par ce canal. Il comprend également la réconciliation et la vérification des clés, en conformité avec le protocole QKD choisi, par des échanges entre la station d'Alice et le satellite utilisant le canal de protocole C_Pr, le stockage des clés CQBⱼ dans le satellite et dans la station de Bob, et la fermeture du canal quantique C_Qu et du canal de protocole C_Pr.

La deuxième étape 212 de la deuxième phase du procédé selon l'invention porte sur le chiffrement des fichiers de données et la transmission des fichiers chiffrés par le satellite.

Elle comprend l'ouverture du canal de données C_Do, le chiffrement des fichiers de données à transmettre par le satellite en utilisant la ou les clé(s) secrète(s) CQBⱼ, et l'envoi des fichiers chiffrées au satellite en utilisant le canal de données C_Do.

La troisième étape 213 de la deuxième phase du procédé selon l'invention porte sur la réception et le déchiffrement par la station de Bob des fichiers de données chiffrés reçus sur le canal de données C_Do en utilisant la ou les clé(s) secrète(s) CQBⱼ. Enfin, le satellite (SAT) clôt le canal de données (C_Do) , et la station de Bob et le satellite détruisent les clés CQBⱼ, achevant ainsi la deuxième phase du procédé selon l'invention.

Les étapes décrites ci-dessus sont données à titre d'illustration d'un mode de réalisation du procédé selon l'invention, et peuvent être adaptés dans une certaine mesure. Par exemple, les canaux de données peuvent être constamment ouverts, ce qui permet de ne pas avoir à prévoir leur ouverture et leur fermeture, mais n'est pas efficace en termes de consommation d'énergie par la charge utile du satellite. L'authentification des équipements n'est pas indispensable mais permet de s'assurer de l'identité des protagonistes. La destruction des clés est avantageuse car elle permet d'éviter leur compromission.

Dans le procédé d'échange sécurisé de données via un système de messagerie par satellite selon l'invention, les stations d'Alice et Bob échangent des données protégées par un algorithme de chiffrement à clés symétriques sans avoir échangé préalablement des clés secrètes par une méthode susceptible de présenter une faille de sécurité, contrairement aux systèmes de messagerie de l'état de l'art dans lesquels les clés secrètes sont échangées préalablement soit en utilisant un chiffrement à clés asymétriques susceptible de présenter une faille de sécurité, soit en ayant recours à un moyen de connexion annexe sécurisé ne faisant pas appel au satellite. Les clés secrètes sont échangées en fonction des besoins, au cours du transfert de données de messagerie sécurisées. Les stations d'Alice et de Bob ne réalisent pas non plus d'échange de clés, impossible à mettre en œuvre pour des stations qui ne sont pas en visibilité l'une de l'autre.

Dans le mode de réalisation décrit, la séparation physique du canal quantique C_Qu et du canal de protocole C_Pr permet d'utiliser ces deux canaux simultanément pour limiter le temps nécessaire à l'établissement quantique des clés.

Dans un mode de réalisation alternatif, le satellite ne réalise pas le déchiffrement des données transmises par la station d'Alice. Les données chiffrées reçues par le satellite sont mémorisées en l'état dans la mémoire du satellite. Dans la deuxième phase du procédé, les données mémorisées, chiffrées par la ou les premières clés CQAᵢ, sont de nouveau chiffrées en utilisant la ou les deuxièmes clés CQBⱼ. En outre, la ou les premières clés CQAᵢ sont chiffrées par le satellite par la ou les deuxièmes clés CQBⱼ (par exemple sous la forme d'un ou exclusif CQAᵢ XOR CQBⱼ), et transmises chiffrées à la station de Bob par le canal de données C_Do ou le canal de protocole C_Pr. La station de Bob est alors en mesure de déchiffrer la ou les premières clés CQAᵢ en utilisant la ou les deuxièmes clés CQBⱼ, et d'utiliser les clés CQAᵢ et CQBⱼ pour déchiffrer les fichiers de données transmis par le satellite. Ce mode de réalisation présente l'avantage de requérir moins de traitements pour la charge utile du satellite, et de chiffrer de bout en bout la liaison entre la station d'Alice et la station de Bob.

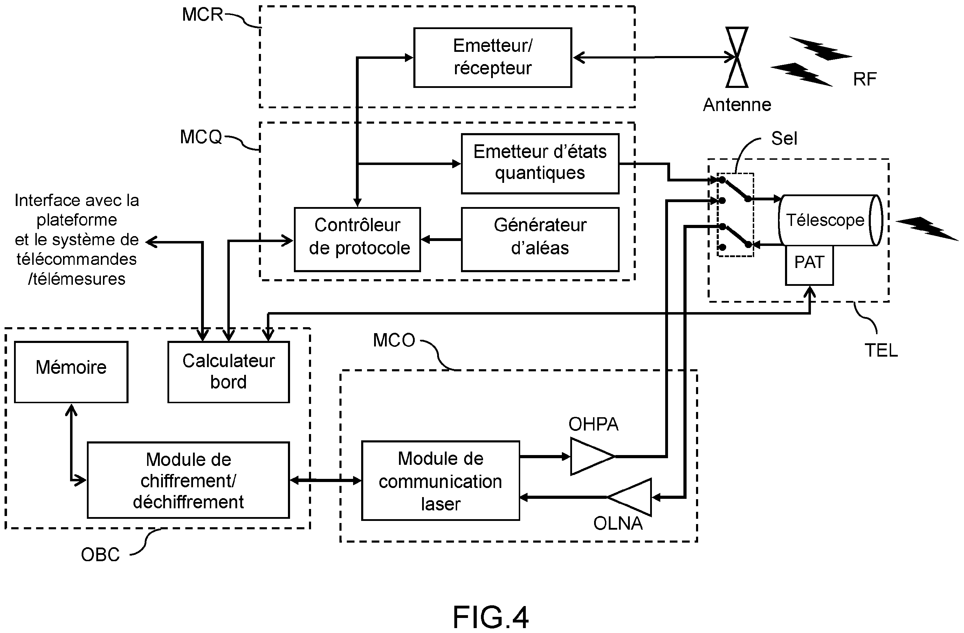

La figure 4 représente un exemple de schéma d'architecture de la charge utile d'un satellite dans un système de messagerie par satellite sécurisé selon un mode de réalisation de l'invention. La charge utile du satellite comprend : un module de communication quantique (MCQ) configuré pour mettre en œuvre le canal quantique C_Qu, un module de communication optique (MCO) configuré pour mettre en œuvre le canal de données C_Do, et un module de communication radiofréquence (MCR), configuré pour mettre en œuvre le canal de protocole C_Pr. Il comprend en outre un module calculateur (OBC) configuré pour séquencer l'ensemble des opérations, un module télescopique (TEL) configuré pour mettre en œuvre les communications optiques et une antenne radio associée à un système de pointage.

Le module de communication quantique MCQ comprend un émetteur d'états quantiques de photons (récepteur lorsque la liaison unidirectionnelle du canal quantique va de la station terrestre vers le satellite), un générateur de séquences aléatoires, et un contrôleur de protocole, relié au module de communication radiofréquence MCR. Ces équipements ou fonctions sont conçus en conformité avec le protocole d'échange quantique de clés (QKD) choisi et permettent l'échange sécurisé de clés.

Le module de communication optique MCO comprend un module de communication laser, un amplificateur optique de puissance (OHPA) configuré pour amplifier les signaux optiques à émettre, et un amplificateur optique à faible bruit (OLNA) configuré pour amplifier les signaux optiques reçus.

Le module télescopique (TEL) comprend un télescope, un dispositif de pointage PAT (acronyme anglais pour *Pointing, Acquisition and Tracking*) configuré pour orienter le télescope en direction de la station terrestre d'intérêt, et un sélecteur de canal (Sel), configuré pour connecter le télescope soit au module de communication quantique MCQ (canal quantique), soit au module de communication optique MCO (canal de données). Cette disposition avantageuse permet au satellite de mettre en œuvre le canal quantique et le canal de données à travers un même module télescopique TEL, le canal quantique et le canal de données n'étant pas utilisés simultanément par le procédé selon l'invention. Cela permet d'alléger la charge utile du satellite et de diminuer l'ensemble des coûts.

Le module calculateur OBC comprend un calculateur de bord, un module de chiffrement/déchiffrement configuré pour assurer le déchiffrement des fichiers de données issues des stations terrestres émettrices (station d'Alice) lorsque les données sont stockées en clair par le satellite, ainsi que le chiffrement des fichiers de données et éventuellement des clés destinées aux stations terrestres réceptrices (station de Bob). Il comprend en outre une mémoire configurée pour stocker les fichiers de données, en clair ou chiffrés suivant le mode de réalisation. Le module de chiffrement/déchiffrement met en œuvre un algorithme de cryptographie à clés symétriques utilisant les clés CQAᵢ et CQBⱼ fournies par le module de communication quantique MCQ via le calculateur bord.

Le système de pointage PAT est configuré pour assurer l'acquisition, le pointage et l'alignement des axes optiques des télescopes du satellite et de la station terrestre d'intérêt. Ce système comprend l'émission de deux signaux balises : une balise qui est émise par le système de pointage PAT du télescope de la station terrestre et qui est reçue par le système de pointage PAT du télescope du satellite et une balise qui est émise par le système de pointage PAT du télescope du satellite et qui est reçue par le système de pointage PAT du télescope de la station terrestre. Ces balises correspondent à des signaux optiques transmis sur une longueur d'onde donnée, permettant aux télescopes d'identifier leur orientation mutuelle maximale en fonction de la puissance reçue des signaux, en recherchant par exemple le maximum de puissance.

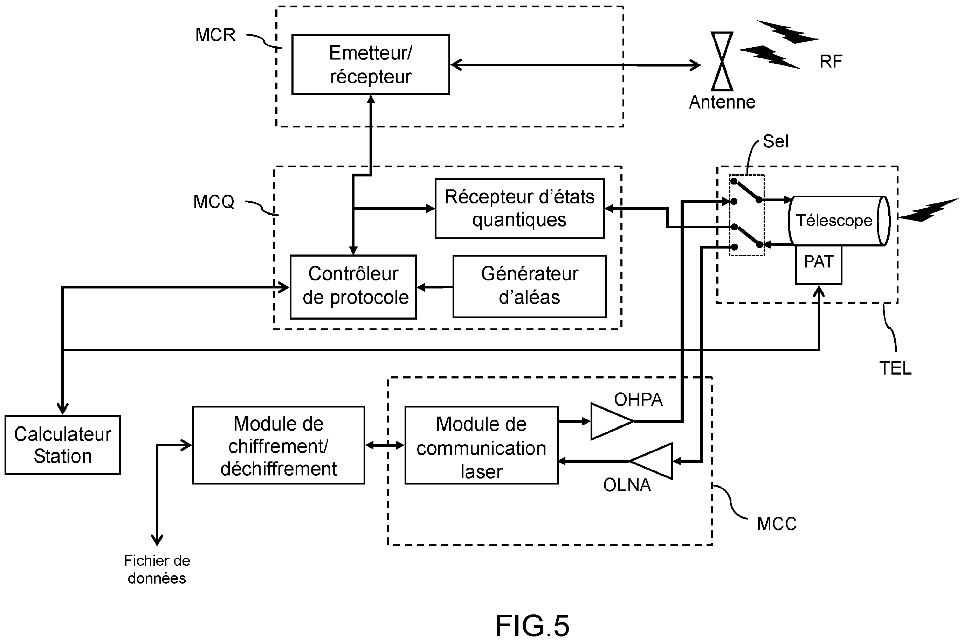

La figure 5 représente un exemple de schéma d'architecture d'une station terrestre dans un système de messagerie par satellite sécurisé selon un mode de réalisation de l'invention. La station terrestre comprend : un module de communication quantique (MCQ) configuré pour mettre en œuvre le canal quantique C_Qu, un module de communication optique (MCO) configuré pour mettre en œuvre le canal de données C_Do, et un module de communication radiofréquence (MCR), configuré pour mettre en œuvre le canal de protocole C_Pr. Il comprend en outre un calculateur configuré pour séquencer l'ensemble des opérations, un module de chiffrement/déchiffrement, un module télescopique (TEL) et une antenne radio associée à un système de pointage.

Le module de communication quantique MCQ comprend un récepteur d'états quantiques de photons (émetteur lorsque la liaison unidirectionnelle utilisée par le canal quantique va de la station terrestre vers le satellite), un générateur de séquences aléatoires, et un contrôleur de protocole relié au module de communication radiofréquence MCR et un système de pointage PAT. Ces équipements ou fonctions sont conçus en conformité avec le protocole d'échange quantique de clés (QKD) choisi et permettent l'échange de clés.

Le module de communication optique MCO comprend un module de communication laser, un amplificateur optique de puissance (OHPA) configuré pour amplifier les signaux optiques à émettre et un amplificateur optique à faible bruit (OLNA) configuré pour amplifier les signaux optiques reçus.

Le module télescopique (TEL) comprend un télescope, un système de pointage PAT configuré pour orienter le télescope en direction de la station terrestre d'intérêt et un sélecteur de canal (Sel) configuré pour connecter le télescope soit au module de communication quantique MCQ (canal quantique), soit au module de communication optique MCO (canal de données).

Le module de chiffrement/déchiffrement assure le chiffrement des fichiers de données destinés au satellite (phase 1) ou le déchiffrement des fichiers de données reçus du satellite (phase 2), selon qu'il s'agisse de la station terrestre émettant les fichiers ou recevant les fichiers. Le module de chiffrement/déchiffrement met en œuvre un algorithme de cryptographie à clés symétriques utilisant les clés CQAᵢ ou CQBⱼ fournies par le module de communication quantique MCQ via le calculateur station.

Le calculateur station assure le bon déroulement des opérations, configure et contrôle les équipements de la station et interface avec les utilisateurs de la station. Le système de pointage PAT est configuré pour assurer l'acquisition, le pointage et l'alignement des axes optiques des télescopes du satellite et de la station terrestre d'intérêt.

Dans un mode de réalisation alternatif non représenté, le canal de données de la figure 1 est mis en œuvre par une liaison radiofréquence. Le procédé d'échange sécurisé de données via une messagerie par satellite selon l'invention décrit précédemment est inchangé. L'architecture du satellite et des stations bord représenté aux figures 4 et 5 ne comprend alors plus de module de communication optique (MCO). Le canal de données peut être mis en œuvre par un module d'émission/réception indépendant, relié à l'antenne RF. Avantageusement, il peut être mis en œuvre par le module de communications radiofréquences (MCR), en reliant l'émetteur/récepteur du MCR à un sélecteur de canal permettant de sélectionner le module de cryptage/décryptage pour la mise en œuvre du canal de données ou le contrôleur de protocole du module de communications quantique (MCQ) pour la mise en œuvre du canal de protocole.

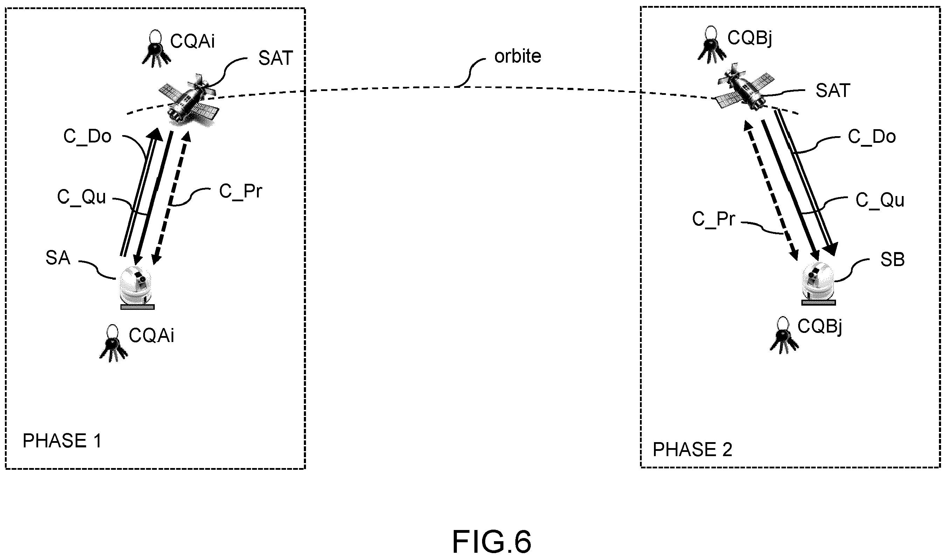

La figure 6 représente un contexte opérationnel correspondant à un autre mode de réalisation d'un procédé d'échange sécurisé de données dans un système de messagerie par satellite selon l'invention. Il se différencie de celui représenté à la figure 1 en ce que le canal de protocole est mis en œuvre par une liaison optique, et non une liaison radiofréquence. L'avantage de ce mode de réalisation par rapport à celui de la figure 1 est qu'il permet de réduire la taille, le coût et la consommation de la charge utile du satellite puisqu'il permet de s'affranchir de la liaison radiofréquence. Les étapes du procédé d'échange sécurisé de données par un système de messagerie par satellite selon l'invention sont alors les mêmes que pour le premier mode de réalisation, à l'exception de ce que l'ouverture et la fermeture du canal de protocole C_Pr correspond à l'établissement et à la fermeture d'une liaison optique. Suivant le mode de réalisation, les données peuvent être mémorisées en clair ou chiffrées par le satellite.

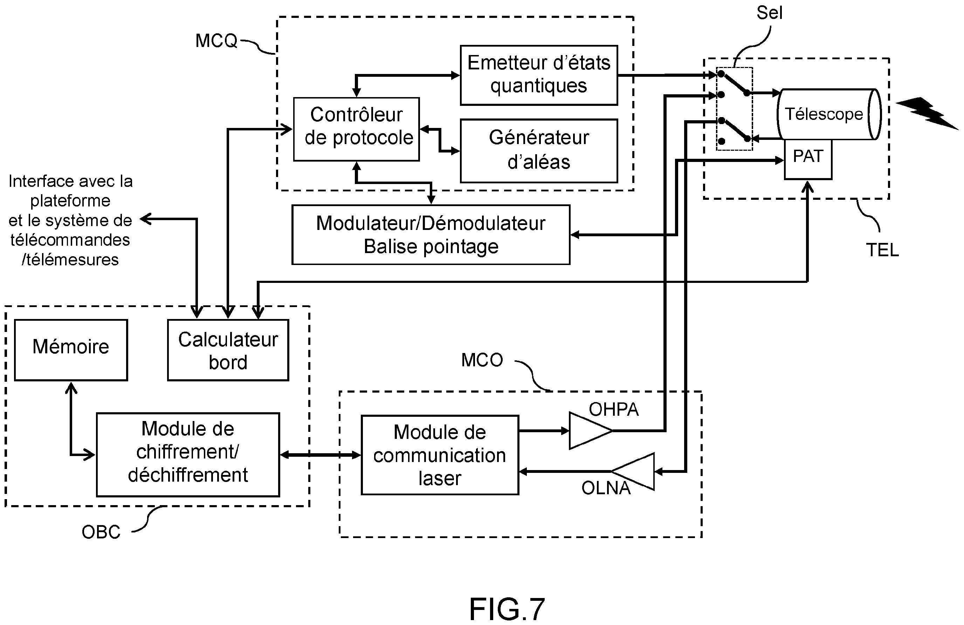

La figure 7 représente un exemple de schéma d'architecture de la charge utile d'un satellite dans un système de messagerie par satellite sécurisé selon le mode de réalisation de l'invention représenté à la figure 6.

Il se distingue de celui représenté à la figure 4 en ce qu'il ne comprend pas de module de communications radiofréquence MCR. Dans ce mode de réalisation, le canal de protocole C_Pr passe par les balises optiques de pointage du module télescopique TEL. Pour cela, les signaux des balises optiques émis et reçus du système de pointage PAT sont connectés à un modulateur/démodulateur de signaux, configuré pour transmettre les données du canal de protocole en modulant/démodulant les balises optiques.

Ce mode de réalisation particulier permet d'opérer la mise en œuvre simultanée des échanges sur le canal de protocole et sur le canal quantique, afin de limiter le temps nécessaire à l'établissement quantique des clés.

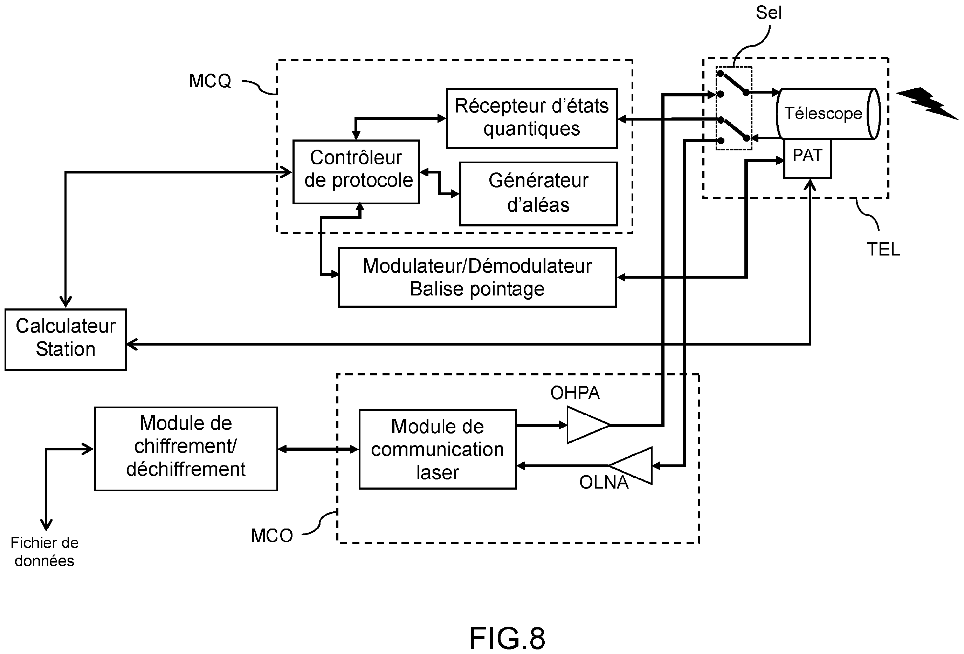

La figure 8 représente un exemple de schéma d'architecture d'une station terrestre dans un système de messagerie par satellite sécurisé selon le mode de réalisation de l'invention représenté à la figure 6. Il se distingue de celui représenté à la figure 5 en ce qu'il ne comprend pas de module de communications radiofréquence MCR. Le canal de protocole C_Pr est mis en œuvre en modulant/démodulant les signaux de balise optique de pointage du module télescopique TEL, de manière comparable à ce qui est décrit à la figure 7.

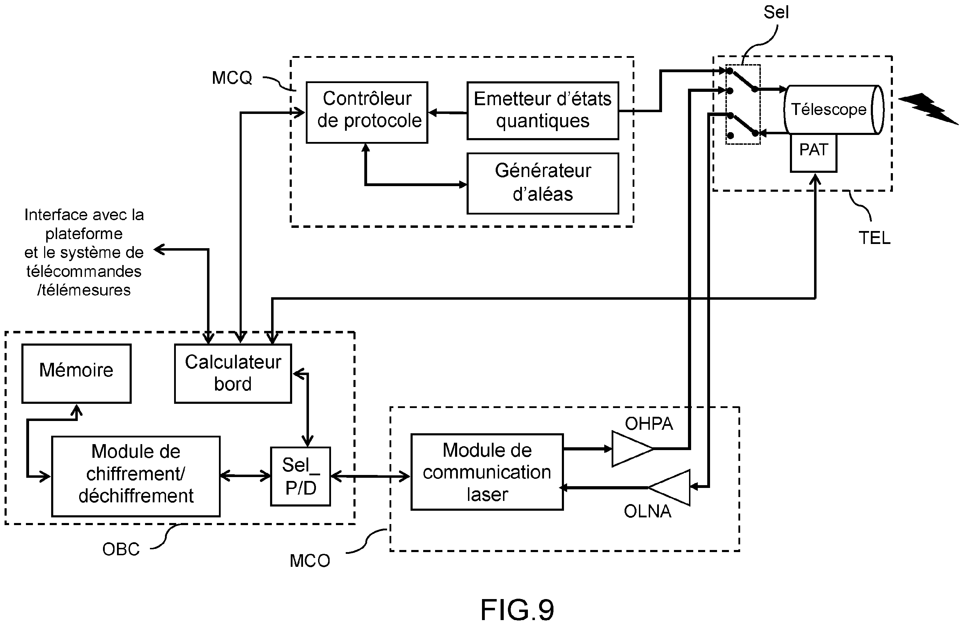

La figure 9 représente un autre exemple de schéma d'architecture de la charge utile d'un satellite dans un système de messagerie par satellite sécurisé selon le mode de réalisation de l'invention représenté à la figure 6.

Il se distingue de celui représenté à la figure 4 en ce qu'il ne comprend pas de module de communications radiofréquence MCR, et de celui représenté à la figure 7 en ce que le canal de protocole est opéré par le module de communication optique MCO, et non à travers les balises optiques du système de pointage PAT.

Dans ce mode de réalisation particulier, le canal de protocole C_Pr, le canal de données et le canal quantique C_Qu sont mis en œuvre sur la même liaison optique à des instants différentiés. Ils se partagent l'accès aux ressources du module télescopique TEL à travers le sélecteur Sel et le sélecteur Sel_P/D configuré pour relier le module de communications optiques MCO soit au contrôleur de protocole du module de communications quantiques via le calculateur de bord, soit au module de chiffrement/déchiffrement des fichiers de données. Ce mode de réalisation est possible puisque la transmission des photons sur le canal quantique et l'échange de données nécessaires à la réconciliation et à la vérification des clés ne sont pas nécessairement mises en œuvre simultanément, de même que les échanges sur le canal de protocole et le canal de données. Par rapport aux autres modes de réalisation présentés, il présente l'avantage de limiter au maximum le nombre d'équipements embarqués dans la charge utile du satellite.

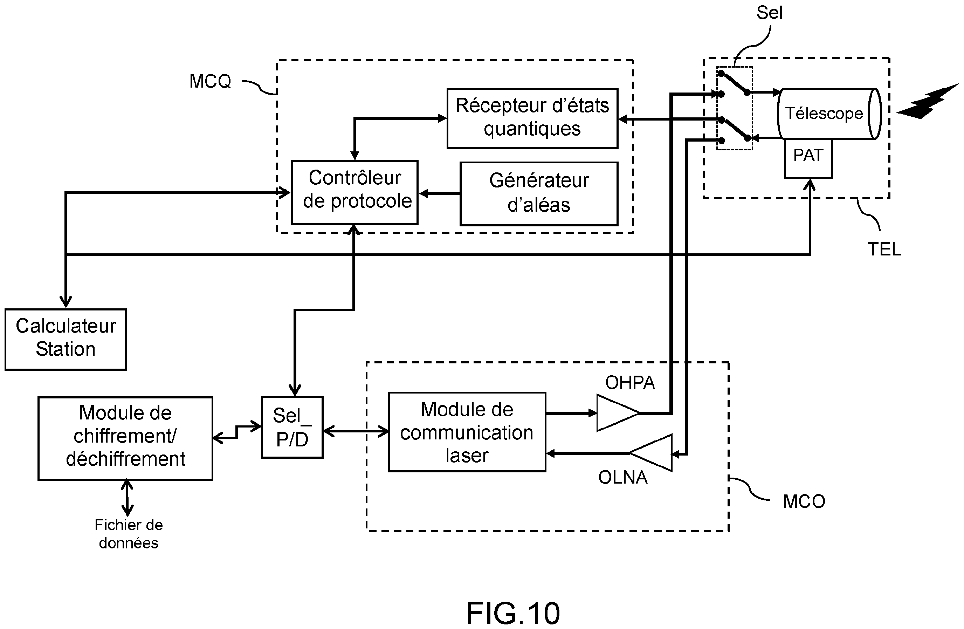

La figure 10 représente un exemple de schéma d'architecture d'une station terrestre dans un système de messagerie par satellite sécurisé selon le mode de réalisation de l'invention représenté à la figure 6. Il se distingue de celui représenté à la figure 5 en ce qu'il ne comprend pas de module de communications radiofréquence MCR, et de celui représenté à la figure 8 en ce que le canal de protocole est opéré par le module de communication optique MCO, et non à travers les balises optiques du PAT, de manière comparable à ce qui est décrit à la figure 9.

Dans un mode de réalisation alternatif non représenté, le canal de données de la figure 6 est mis en œuvre par une liaison radiofréquence. Le procédé d'échange sécurisé de données via une messagerie par satellite selon l'invention est alors inchangé. Les architectures du satellite et des stations terrestres représentées aux figures 7 à 8 comprennent alors un module de communications radiofréquence (MCR) relié à une antenne en lieu et place du module de communications optique (MCO). Les architectures du satellite et des stations terrestres représentées aux figures 9 à 10 comprennent alors en outre un module de communications radiofréquence (MCR) relié à une antenne en plus du module de communications optique (MCO).

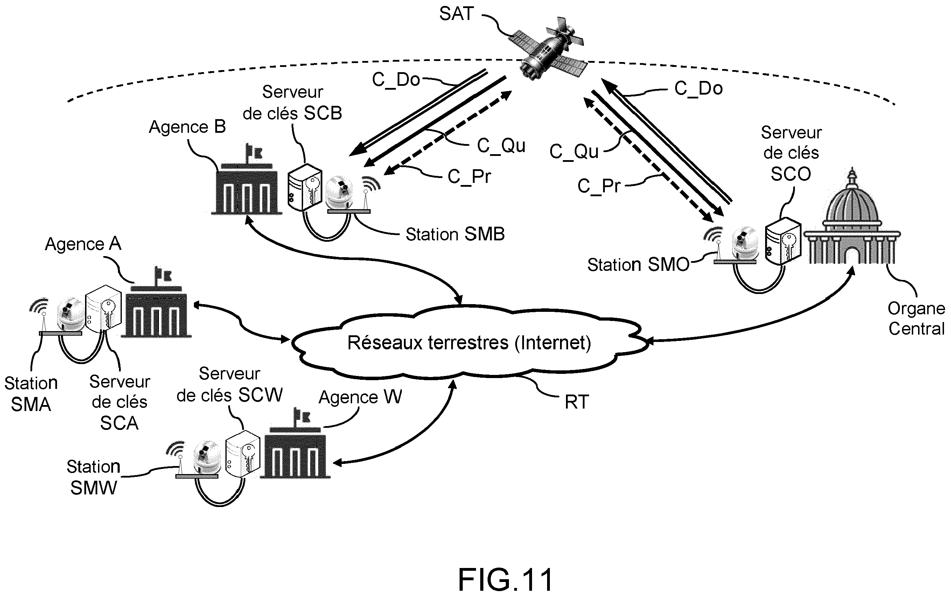

La figure 11 représente un exemple de schéma d'architecture d'un système de distribution de clés secrètes utilisant le procédé d'échange sécurisé de données par satellite selon un mode de réalisation de l'invention. Le système de distribution de clés secrètes par satellite comprend un ou plusieurs satellites (SAT) et un ensemble de stations terrestres de messagerie (SMA, SMB, SMW, SMO). Les stations terrestres (SMA, SMB, SMW, SMO) sont dans les locaux d'agences distantes (Agence A, Agence B, Agence W) d'un organe central (Organe Central), et sont connectées à des serveurs de clés secrètes (SCA, SCB, SCW, SCOC). Les agences distantes et l'Organe Central sont interconnectés au travers de réseaux terrestres de communication (RT) non sécurisés comme par exemple Internet. Les communications entre les agences distantes et l'Organe Central ou entre les agences distantes entre-elles utilisant les réseaux terrestres (RT) sont sécurisées par des algorithmes de cryptographie à clés symétriques dont les clés symétriques ou secrètes sont échangées par le système de messagerie sécurisé par satellite objet de l'invention. L'échange de fichiers de clés secrètes entre les serveurs de clés de l'organe central et des agences se fait par le système de messagerie sécurisée par satellite objet de l'invention. La procédure de distribution des clés est la suivante :
- pendant le passage du satellite au-dessus de l'organe central, la station terrestre de messagerie (SMO) et le satellite (SAT) échangent par voie quantique une ou plusieurs clés secrètes CQAᵢ. Le serveur de clé (SCO) de l'organe central utilise cette ou ces clés secrètes pour chiffrer un ou plusieurs fichiers de clés secrètes, qui sont alors transmis de façon sécurisée au satellite via la station terrestre de messagerie, par exemple un fichier par serveur de clés d'agence distante. Le satellite mémorise le ou les fichier(s), en clair ou crypté par la ou les clés secrètes CQAᵢ ;
- pendant le passage au-dessus d'une agence distante, le satellite et la station terrestre de messagerie distante (SMA, SCB, SCW) échangent une ou plusieurs clés secrètes CQBⱼ. Le satellite utilise cette clé secrète ou ces clés secrètes CQBⱼ pour chiffrer le ou les fichiers de clés secrètes stockés en mémoire et destinés à l'agence distante, puis les transmet de façon sécurisée au serveur de clés de l'agence distante (SCA, SCB, SCW) via la station terrestre de messagerie (SMA, SMB, SMW). Les fichiers de clés secrètes sont alors déchiffrées par le serveur de clé en utilisant la ou les clés secrètes CQBⱼ. Lorsque le fichier de clés secrètes est mémorisé en crypté par le satellite, la ou les clés secrètes CQAᵢ sont transmises au serveur de clé pour qu'il puisse déchiffrer les fichiers de clés secrètes, après chiffrement de la ou les clés secrètes CQAᵢ par la ou les clés secrètes CQBⱼ.

Le même principe peut être mis en œuvre entre toutes les stations de messagerie. Ainsi, les serveurs de clés (SCA, SCB, SCW, SCOC) peuvent échanger des fichiers de clés secrètes de manière sécurisée via le ou les satellites (SAT).

Ce mode de réalisation présente l'avantage que chaque échange de clés secrètes n'implique qu'un nombre limité et fini d'échange quantique de clés, sans lien avec la taille des fichiers de clés secrètes, tout en garantissant un niveau de sécurité maximum. Cela limite la complexité de mise en œuvre de l'échange de clés entre l'organe central et les agences distantes.

## Revendications

1. Procédé d'échange sécurisé de fichiers de clés secrètes via un système de messagerie par satellite comprenant :
- au moins un satellite (SAT),
- une pluralité de stations terrestres (SMO, SMA, SMB, SMW) reliées chacune à un serveur de clés secrètes (SCO, SCA, SCB, SCW)
le procédé étant **caractérisé en ce qu'**il comprend :
- une première phase, réalisée lors du passage d'un satellite (SAT) parmi les au moins un satellite en visibilité d'une première station terrestre (SMO), au cours de laquelle :
∘ le satellite et la première station terrestre échangent au moins une première clé secrète (CQAᵢ) par une liaison quantique (201),
∘ le serveur de clés secrètes (SCO) relié à la première station terrestre chiffre un ou plusieurs fichiers de clés secrètes en utilisant la ou les premières clés secrètes (CQAᵢ) et transmet le ou les fichiers de clés secrètes chiffrés au satellite (202),
∘ le satellite reçoit le ou les fichiers de clés secrètes transmis par la première station terrestre et le ou les stocke en mémoire (203),
- une deuxième phase, réalisée lors du passage du satellite (SAT) en visibilité d'une deuxième station terrestre (SMA, SMB, SMW), au cours de laquelle :
∘ le satellite et la deuxième station terrestre échangent au moins une deuxième clé secrète (CQBⱼ) par une liaison quantique (211),
∘ le satellite chiffre le ou les fichiers de clés secrètes stockés en mémoire en utilisant la ou les deuxièmes clés secrètes (CQBⱼ) et le ou les transmet à la deuxième station terrestre (212),
∘ la deuxième station terrestre reçoit le ou les fichiers de clés secrètes chiffrés transmis par le satellite, et le ou les transmet au serveur de clés secrètes (SCA, SCB) qui déchiffre le ou les fichiers de clés secrètes en utilisant la ou les deuxièmes clés secrètes (CQBⱼ) (213).

2. Procédé d'échange sécurisé de fichiers de clés secrètes selon la revendication 1, dans lequelle les fichiers de clés secrètes reçus par le satellite lors de la première phase du procédé sont déchiffrés en utilisant la ou les premières clés secrètes (CQAᵢ) puis stockées en clair dans la mémoire du satellite.

3. Procédé d'échange sécurisé de fichiers de clés secrètes selon la revendication 1, dans lequel :
- le ou les fichiers de clés secrètes reçus par le satellite lors de la première phase du procédé sont stockés chiffrées dans la mémoire du satellite,
- la ou les premières clés secrètes (CQAᵢ) sont chiffrées par le satellite en utilisant la ou les deuxièmes clés secrètes (CQBⱼ) et transmises à la deuxième station terrestre lors de la deuxième phase du procédé,
- le déchiffrement du ou des fichiers de clés chiffrées reçues par la deuxième station terrestre comprend en outre l'utilisation de la ou les premières clés secrètes (CQAᵢ).

4. Procédé d'échange sécurisé de fichiers de clés secrètes selon l'une des revendications précédentes, dans lequel les étapes d'échange de clés secrètes par une liaison quantique (201, 211), respectivement entre la première station terrestre et le satellite et entre la deuxième station terrestre et le satellite, sont réalisées par la mise en œuvre d'un canal quantique optique (C_Qu) unidirectionnel pour la transmission en espace libre de photons et d'un canal de protocole (C_Pr) bidirectionnel pour la réconciliation et la vérification des clés, et dans lequel les étapes de transmission du ou des fichiers de clés secrètes chiffrés (202, 212), respectivement entre la première station terrestre et le satellite et entre la deuxième station terrestre et le satellite, sont réalisées par la mise en œuvre d'un canal de données (C_Do).

5. Procédé d'échange sécurisé de fichiers de clés secrètes selon la revendication 4, dans lequel le canal de protocole (C_Pr) est mis en œuvre par une liaison optique en espace libre en modulant/démodulant des balises de pointage destinés à l'orientation de télescopes du satellite et des stations terrestres, et dans lequel le canal quantique (C_Qu) et le canal de données (C_Do) sont mis en œuvre par une même liaison optique en espace libre.

6. Procédé d'échange sécurisé de fichiers de clés secrètes selon la revendication 4, dans lequel le canal de protocole (C_Pr) est mis en œuvre par une liaison radiofréquence en espace libre, et dans lequel le canal quantique (C_Qu) et le canal de données (C_Do) sont mis en œuvre par une même liaison optique en espace libre.

7. Procédé d'échange sécurisé de fichiers de clés secrètes selon la revendication 4, dans lequel le canal de protocole (C_Pr), le canal quantique (C_Qu) et le canal de données (C_Do) sont mis en œuvre par une même liaison optique en espace libre.

8. Satellite (SAT) **caractérisé en ce qu'**il comprend :
- des moyens (MCQ) pour la mise en œuvre d'un canal quantique (C_Qu) par une liaison optique en espace libre,
- des moyens pour la mise en œuvre d'un canal de protocole (C_Pr) par une liaison en espace libre,
- des moyens (MCO) pour la mise en œuvre d'un canal de données (C_Do) par une liaison en espace libre,
et **en ce qu'**il est configuré pour mettre en œuvre un procédé d'échange sécurisé de fichiers de clés secrètes via un système de messagerie par satellite selon l'une des revendications 1 à 7 avec deux stations terrestres.

9. Station terrestre (SA, SB) **caractérisée en ce qu'**elle comprend :
- des moyens (MCQ) pour la mise en œuvre d'un canal quantique par une liaison optique en espace libre,
- des moyens pour la mise en œuvre d'un canal de protocole (C_Pr) par une liaison en espace libre,
- des moyens (MCO) pour la mise en œuvre d'un canal de données (C_Do) par une liaison en espace libre,
et **en ce qu'**elle est configurée pour émettre des fichiers de clés secrètes chiffrés vers une deuxième station terrestre par l'intermédiaire d'un satellite ou pour recevoir des fichiers de clés secrètes chiffrés d'une deuxième station terrestre par l'intermédiaire d'un satellite par un procédé d'échange sécurisé de fichiers de clés secrètes via un système de messagerie par satellite selon l'une des revendications 1 à 7.

10. Dispositif selon la revendication 8 ou la revendication 9, dans lequel le canal de données est mis en œuvre par une liaison optique en espace libre.

11. Dispositif selon la revendication 10, comprenant des moyens (Sel) permettant le partage d'une liaison optique en espace libre entre le canal quantique et le canal de données.

12. Dispositif selon l'une des revendications 8 à 11, comprenant des moyens de modulation/démodulation de balises de pointage destinées à l'orientation d'un télescope du satellite et de télescopes des stations terrestres permettant la mise en œuvre du canal de protocole (C_Pr).

13. Dispositif selon l'une des revendications 8 à 11, comprenant des moyens (Sel_P/D) permettant le partage d'une liaison optique en espace libre entre le canal de protocole et le canal de données.

14. Système de messagerie par satellite comprenant au moins un satellite (SAT) selon l'une des revendications 8 ou 10 à 13, et au moins deux stations terrestres (SA, SB) selon l'une des revendications 9 à 13.
